# EUROPEAN PATENT SPECIFICATION

(11) **EP 2 924 669 B1**
(45) Date of publication and mention of the grant of the patent: **29.08.2018**
(21) Application number: 15155625.5
(22) Date of filing: 18.02.2015
(51) Int. Cl.: G08C 23/04

(54) **Method and apparatus for transmitting infrared signal and remote controller**
Verfahren und Vorrichtung zur Übertragung von Licht und Fernsteuerung
Procédé et appareil de transmission de signal infrarouge et télécommande

(30) Priority: 28.03.2014 CN 201410124175
(43) Date of publication of application: 30.09.2015
(73) Proprietor: Xiaomi Inc., Beijing 100085 (CN)
(72) Inventor: Li, Qin, 100085 BEIJING (CN)
(74) Representative: Underwood, Nicolas Patrick

(56) References cited:
- EP-A1- 1 983 709
- EP-A2- 1 684 248
- US-A- 5 640 160
- US-A1- 2004 155 793
- US-A1- 2006 119 585
- US-B2- 8 477 010

## Description

### TECHNICAL FIELD

The present disclosure generally relates to the technical field of wireless transmission, and particularly, to a method and an apparatus for transmitting an infrared signal, and a remote controller.

### BACKGROUND

In daily work and life, infrared remote control technology is typically used in wireless remote control of home appliances such as televisions, air conditioners, refrigerators, set-top boxes, etc. A basic principle of the infrared remote control technology is: an infrared signal is sent by a remote controller operated by a user, a remote controlled device (a television, an air conditioner, etc.) receives the infrared signal through a built-in reception circuit and decodes the infrared signal to obtain a control instruction that is configured to control a corresponding component in the remote controlled device to perform a corresponding operation.

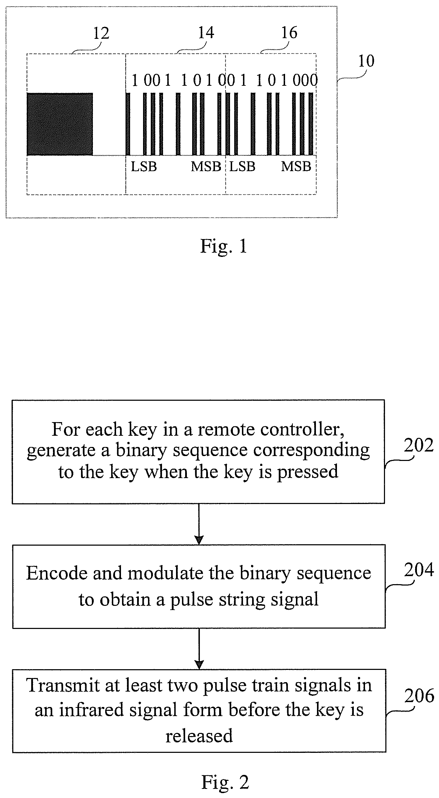

NEC protocol is a commonly used infrared transmission protocol, which stipulates an infrared signal transmission format. Referring to Fig. 1, this figure is a block diagram illustratively showing an infrared signal according to the NEC protocol. In the NEC protocol, a complete infrared signal 10 includes: a start code 12, a user code 14 and a data code 16. The start code 12 is configured to indicate that the remote controller starts to work, and the remote controlled device may be guided into a decoding program by the start code 12. The start code 12 is typically an AGC (Automatic Gain Control) pulse (a high level) with a pulse width of 9ms and an idle signal (a low level) with a pulse width of 4.5ms. The user code 14 is configured to identify a kind of remote controller, and different types of remote controllers correspond to different user codes 14. The data code 16 is configured to identify a key value of a key, and different keys in the remote controller correspond to different key values, and the key values are indicated by the data code 16. In the NEC protocol, both the user code and the data code are 8-bit binary sequences. Logic 0 is indicated by a high level pulse signal with a pulse width of 560us + a low level pulse signal with a pulse width of 560us; logic 1 is indicated by a high level pulse signal with a pulse width of 560us + a low level pulse signal with a pulse width of 1680us. In addition, in the NEC protocol, a signal transmission cycle is 110ms. In general, over a time interval for a certain key in the remote controller from being pressed by a user to being released, the remote controller may transmit one complete infrared signal.
Documents US 8477020, US 2004/155793, and US 2006/119585 disclose known methods for sending infrared signals.

During the process of devising the present disclosure, at least the following defects in the above method are found out: in the NEC protocol, the signal transmission cycle is 110ms, over the time interval for a certain key in the remote controller from being pressed by a user to being released, the remote controller can usually transmit only one complete infrared signal, and since the infrared signal is very susceptible to interference from light or electromagnetism in the environment, the remote controlled device may be unable to read the complete infrared signal, and thereby unable to decode the infrared signal to obtain the control instruction and to perform corresponding operation. That is, there exists a problem in the above method that the remote controller has a weak anti-interference capability and a low success rate of remote control.

### SUMMARY

In order to solve the problem of the technical solution involved in the background wherein the remote controller has a weak anti-interference capability and a low success rate of remote control, embodiments of the present disclosure provide a method and an apparatus for transmitting an infrared signal, and a remote controller. The technical solutions are as follows.

According to a first aspect of the embodiments of the present disclosure, a method for transmitting an infrared signal according to claim 1 is provided.

According to a specific embodiment, when each binary sequence segment contains a two-bit binary number, the corresponding relationship between different binary sequence segments and different combinations of a high level pulse signal and a low level pulse signal includes:
a binary sequence segment "00" corresponding to a high level pulse signal with a first pulse width + a low level pulse signal with a second pulse width;
a binary sequence segment "01" corresponding to a high level pulse signal with the first pulse width + a low level pulse signal with a third pulse width;
a binary sequence segment "10" corresponding to a high level pulse signal with the first pulse width + a low level pulse signal with a fourth pulse width; and
a binary sequence segment "11" corresponding to a high level pulse signal with the first pulse width + a low level pulse signal with a fifth pulse width;
and any two of the second pulse width, the third pulse width, the fourth pulse width and the fifth pulse width are different from each other.

According to a specific embodiment, transmitting at least two pulse string signals in an infrared signal form before the key is released includes:
transmitting the pulse string signal repeatedly in the infrared signal form according to a preset transmission cycle before the key is released.

According to a second aspect of the embodiments of the present disclosure, an apparatus for transmitting an infrared signal according to claim 4 is provided.

According to a specific embodiment, when each binary sequence segment contains a two-bit binary number, the corresponding relationship between different binary sequence segments and different combinations of a high level pulse signal and a low level pulse signal includes:
a binary sequence segment "00" corresponding to a high level pulse signal with a first pulse width + a low level pulse signal with a second pulse width;
a binary sequence segment "01" corresponding to a high level pulse signal with the first pulse width + a low level pulse signal with a third pulse width;
a binary sequence segment "10" corresponding to a high level pulse signal with the first pulse width + a low level pulse signal with a fourth pulse width; and
a binary sequence segment "11" corresponds to a high level pulse signal with the first pulse width + a low level pulse signal with a fifth pulse width;
and any two of the second pulse width, the third pulse width, the fourth pulse width and the fifth pulse width are different from each other.

According to a specific embodiment, the signal transmission module is further configured to transmit the pulse string signal repeatedly in the infrared signal form according to a preset transmission cycle before the key is released.

According to a third aspect of the embodiments of the present disclosure, a remote controller is provided. The remote controller comprises an apparatus as defined above.

According to a fourth aspect of the embodiments of the present disclosure, there is provided a computer program, which when executing on a controller of a remote controller, performs a method of the first aspect of the embodiments of the present disclosure.

This computer program can use any programming language and take the form of source code, object code or a code intermediate between source code and object code, such as a partially compiled form, or any other desirable form.

According to a fifth aspect of the embodiments of the present disclosure, there is provided a recording medium readable by a computer and having recorded thereon a computer program including instructions for executing the steps of a method of the first aspect of the embodiments of the present disclosure.

The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The technical solutions provided by the embodiments of the present disclosure may have the following advantageous effects:

Over a time interval for a certain key in the remote controller from being pressed to being released, a binary sequence corresponding to the key is generated, the binary sequence is encoded and modulated to obtain a pulse string signal, and then at least two pulse string signals are transmitted in an infrared signal form. Thus, the problem of the technical solution involved in the background wherein the remote controller has a weak anti-interference capability and a low success rate of remote control is solved. In the technical solution provided by the embodiments of the present disclosure, over the time interval for a certain key in the remote controller from being pressed by a user to being released, at least two identical and complete pulse string signals are sequentially and rapidly sent in an infrared signal form by the remote controller, as compared with the technical solution involved in the background in which over a time interval for a certain key in the remote controller from being pressed to being released, the remote controller may only send one complete infrared signal. Thus, possibility of complete reception of the infrared signals is improved, i.e., the anti-interference capability and success rate of remote control of the remote controller are improved.

It shall be appreciated that the above general description and the later detailed description are only illustrative but not for limiting the present disclosure.

### BRIEF DESCRIPTION OF THE DRAWINGS

In order to clearly explain the embodiments of the present disclosure, hereinafter, the introduction to the drawings required to be used in the depiction of the embodiments will be given simply. It is apparent that the following drawings only illustrate some of the embodiments of the present disclosure, and one of ordinary skill in this art could obtain other drawings based on these drawings without inventive work.
Fig. 1 is a block diagram illustratively showing an infrared signal according to NEC protocol;
Fig. 2 is a flow chart showing a method for transmitting an infrared signal according to an exemplary embodiment;
Fig. 3A is a flow chart showing a method for transmitting an infrared signal according to another exemplary embodiment;
Fig. 3B is a block diagram illustratively showing different combinations of a high level pulse signal and a low level pulse signal;
Fig. 3C is a block diagram illustratively showing an infrared signal;
Fig. 3D is a block diagram illustratively showing a carrier wave;
Fig. 4 is a block diagram showing an apparatus for transmitting an infrared signal according to an exemplary embodiment;
Fig. 5 is a block diagram showing an apparatus for transmitting an infrared signal according to another exemplary embodiment; and
Fig. 6 is a block diagram showing a remote controller according to an exemplary embodiment.

Specific embodiments in this disclosure have been shown by way of example in the foregoing drawings and are hereinafter described in detail. The figures and written description are not intended to limit the scope of the inventive concepts in any manner. Rather, they are provided to illustrate the inventive concepts to one of ordinary skill in this art with reference to particular embodiments.

### DETAILED DESCRIPTION

In order to make objects, technical solutions and advantages of the present disclosure more clear, the present disclosure will be described in detail with reference to the accompany drawings. It is apparent that, the described embodiments are only a part of but not all of the embodiments of the present disclosure. Based on the embodiments of the present disclosure, other embodiments obtained without paying any creative labor by one of ordinary skill in this art all belong to the protective scope of the present disclosure.

Fig. 2 is a flow chart showing a method for transmitting an infrared signal according to an exemplary embodiment, and this embodiment will be illustrated taking an example where the method for transmitting an infrared signal is applied in a remote controller. The method for transmitting an infrared signal may include the following steps.

In step 202, for each key in a remote controller, a binary sequence corresponding to the key is generated when the key is pressed.

In step 204, the binary sequence is encoded and modulated to obtain a pulse string signal.

In step 206, at least two pulse string signals are transmitted in an infrared signal form before the key is released.

To sum up, in the method for transmitting an infrared signal provided by this embodiment, over a time interval for a certain key in the remote controller from being pressed to being released, a binary sequence corresponding to the key is generated, the binary sequence is encoded and modulated to obtain a pulse string signal, and then at least two pulse string signals are transmitted in an infrared signal form. Thus, the problem of the technical solution involved in the background wherein the remote controller has a weak anti-interference capability and a low success rate of remote control is solved. In the present embodiment, over the time interval for a certain key in the remote controller from being pressed to being released, at least two identical and complete pulse string signals are sequentially and rapidly sent in an infrared signal form by the remote controller, as compared with the technical solution involved in the background in which over a time interval for a certain key in the remote controller from being pressed to being released, the remote controller may only send one complete infrared signal. Thus, possibility of complete reception of the infrared signals is improved, i.e., the anti-interference capability and success rate of remote control of the remote controller are improved.

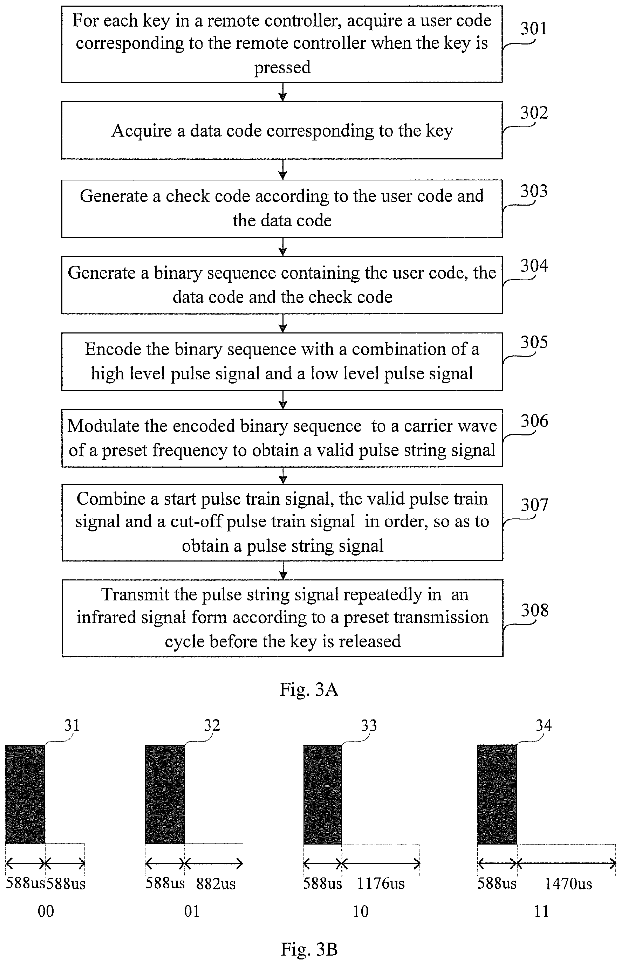

Fig. 3A is a flow chart showing a method for transmitting an infrared signal according to another exemplary embodiment, and this embodiment will be illustrated taking an example where the method for transmitting an infrared signal is applied in a remote controller. The method for transmitting an infrared signal may include the following steps.

In step 301, for each key in a remote controller, a user code corresponding to the remote controller is acquired when the key is pressed.

For each key in a remote controller, a user code corresponding to the remote controller is acquired when the key is pressed. The user code is configured to identify kind of the remote controller, and different types of remote controllers correspond to different user codes. For example, an A type remote controller corresponds to a user code 0x86 (a hexadecimal number), and a B type remote controller corresponds to a user code 0x88. In an infrared transmission protocol provided by this embodiment, the user code is indicated by an 8-bit binary sequence (C7 C6 C5 C4 C3 C2 C1 C0). For example, 0x86 is transformed to an 8-bit binary sequence 10000110.

It is apparent that, in other possible implementations, the user code may also be indicated by a 16-bit binary sequence, and the present embodiment does not impose specific limitations on this.

After receiving the infrared signals transmitted by the remote controller subsequently, the remote controlled device may recognize, according to the user code, whether the infrared signals are infrared signals sent by a remote controller associated with the remote controlled device itself. If the remote controlled device recognizes that the infrared signals are infrared signals sent by the remote controller associated with the remote controlled device itself, decoding is performed to obtain a control instruction, and corresponding components are controlled to perform corresponding operations according to the control instruction, and so on.

In step 302, a data code corresponding to the key is acquired.

The remote controller acquires a data code corresponding to the key. The data code is configured to identify a key value of a key, and different keys in the remote controller correspond to different key values, and the key values are indicated by data codes. For example, a key value of a Home key is 0x08, and a key value of a search key is 0xd2, and a key value of a play/pause key is 0x89, and so on. Similar to the user code, the data code is indicated by an 8-bit binary sequence (D7 D6 D5 D4 D3 D2 D1 D0). For example, 0x08 is transformed to an 8-bit binary sequence 00001000.

It is apparent that, in other possible implementations, the data code may also be indicated by a 16-bit binary sequence, and the present embodiment does not impose specific limitations on this.

It should be noted that, the above step 302 may be performed before step 301, may also be performed after step 301, and may also be performed simultaneously with step 301. This embodiment is illustrated only by taking an example where step 302 is performed before step 301, and the present embodiment does not impose limitations on this.

In step 303, a check code is generated according to the user code and the data code.

After acquiring the user code and the data code, the remote controller generates a check code according to the user code and the data code. The check code is configured to check correctness of the user code and the data code obtained by decoding for the remote controlled device.

The remote controller may generate the check code by the following two possible implementations:

In an example useful for understanding the invention calculations are performed on the user code and the data code according to a preset operational rule to obtain the check code.

The preset operational rule may be any one of operational rules such as addition, subtraction, multiplication and exclusive OR (XOr) operation, and so on. Assuming that the preset operational rule is Xor operation, then the check code (P7 P6 P5 P4 P3 P2 P1 P0) = (C7 C6 C5 C4 C3 C2 C1 C0) Xor (D7 D6 D5 D4 D3 D2 D1 D0). For example, when the user code is 10000110 and the data code is 00001000, the check code obtained by performing Xor operation on the user code and the data code as: (P7 P6 P5 P4 P3 P2 P1 P0) = (10000110) Xor (00001000) =10001110.

In an implementation, the check code is obtained by averagely dividing the user code and the data code into m segments, m≥2 and sequentially performing calculations on the m segments of the user code and the m segments of the data code arranged in order according to the preset operational rule.

In order to shorten a length of the check code so that a length of the pulse string signal obtained by subsequent encoding and modulating is relatively short, the remote controller may averagely divide the user code and the data code into m segments. In this embodiment, assuming that m=2, then the user code may be divided into two segments, including (C7 C6 C5 C4) and (C3 C2 C1 C0), and the data code may be divided into two segments, including (D7 D6 D5 D4) and (D3 D2 D1 D0). Afterwards, the remote controller sequentially performs calculations on the m segments of the user code and the m segments of the data code arranged in order according to the preset operational rule to obtain the check code. The preset operational rule may be any one of operational rules such as addition, subtraction, multiplication and Xor operation, and so on.

Assuming that the preset operational rule is Xor operation, then the check code (P3 P2 P1 P0) = (C7 C6 C5 C4) Xor (C3 C2 C1 C0) Xor (D7 D6 D5 D4) Xor (D3 D2 D1 D0). For example, when the user code is 10000110 and the data code is 00001000, the check code obtained by sequentially performing calculations on the two segments of the user code and the two segments of the data code arranged in order with the Xor operation is (P3 P2 P1 P0) = (1000) Xor (0110) Xor (0000) Xor (1000) =0110.

In step 304, a binary sequence containing the user code, the data code and the check code is generated.

The remote controller generates a binary sequence containing the user code, the data code and the check code. In this embodiment, assuming that the binary sequence includes an 8-bit user code (C7 C6 C5 C4 C3 C2 C1 C0), an 8-bit data code (D7 D6 D5 D4 D3 D2 D1 D0) and a 4-bit check code (P3 P2 P1 P0) which are arranged in order.

In step 305, the binary sequence is encoded with a combination of a high level pulse signal and a low level pulse signal.

The remote controller encodes the binary sequence with a combination of a high level pulse signal and a low level pulse signal.

In this embodiment, this step may include the following sub steps.

Firstly, the binary sequence is averagely divided into n binary sequence segments, and each binary sequence segment contains at least a two-bit binary number (n≥1).

In order to make a length of the pulse string signal obtained after encoding and modulating relatively short, segment encoding is performed on the binary sequence, instead of directly performing 0 and 1 encoding on the binary sequence. Assuming that each binary sequence segment contains a two-bit binary number, then in this embodiment, the remote controller averagely divides the binary sequences (C7 C6 C5 C4 C3 C2 C1 C0), (D7 D6 D5 D4 D3 D2 D1 D0) and (P3 P2 P1 P0) into 10 binary sequence segments. In each binary sequence segment, a possible combination of logic 0 and logic 1 is one of 00, 01, 10 and 11.

Secondly, combinations of a high level pulse signal and a low level pulse signal corresponding to respective binary sequence segments are acquired according to a corresponding relationship between different binary sequence segments and different combinations of a high level pulse signal and a low level pulse signal.

The corresponding relationship between different binary sequence segments and different combinations of a high level pulse signal and a low level pulse signal is stored in the remote controller in advance, and the remote controller acquires combinations of a high level pulse signal and a low level pulse signal corresponding to respective binary sequence segments according to the corresponding relationship.

When each binary sequence segment contains a two-bit binary number, the above corresponding relationship may include: a binary sequence segment "00" corresponding to a high level pulse signal with a first pulse width + a low level pulse signal with a second pulse width; a binary sequence segment "01" corresponding to a high level pulse signal with the first pulse width + a low level pulse signal with a third pulse width; a binary sequence segment "10" corresponding to a high level pulse signal with the first pulse width + a low level pulse signal with a fourth pulse width; and a binary sequence segment "11" corresponding to a high level pulse signal with the first pulse width + a low level pulse signal with a fifth pulse width; and any two of the second pulse width, the third pulse width, the fourth pulse width and the fifth pulse width are different from each other.

Referring to Fig. 3B, this figure illustratively shows correlation corresponding relationship between different binary sequence segments and different combinations of a high level pulse signal and a low level pulse signal when each binary sequence segment contains a two-bit binary number. A binary sequence segment "00" 31 is indicated by a high level pulse signal with a 588us pulse width + a low level pulse signal with a 588us pulse width; a binary sequence segment "01" 32 is indicated by a high level pulse signal with a 588us pulse width + a low level pulse signal with a 882us pulse width; a binary sequence segment "10" 33 is indicated by a high level pulse signal with a 588us pulse width + a low level pulse signal with a 1176us pulse width; and a binary sequence segment "11" 34 is indicated by a high level pulse signal with a 588us pulse width + a low level pulse signal with a 1470us pulse width.

It should be noted that, the above high level and low level are not level conceptions in the field of electronic circuit, and they are only indications for representing binary sequence segments "00" "01", "10" and "11", which means in the subsequent infrared signal emission process, the infrared signal is not emitted during the low level period, and the infrared signal is emitted during the high level period.

Thirdly, the acquired n combinations of a high level pulse signal and a low level pulse signal are arranged in order, so as to obtain an encoded binary sequence.

After the remote controller acquires combinations of a high level pulse signal and a low level pulse signal corresponding to respective binary sequence segments, according to an order of respective binary sequence segments in the binary sequence, the remote controller correspondingly arranges the combinations of a high level pulse signal and a low level pulse signal in order, so as to obtain an encoded binary sequence,.

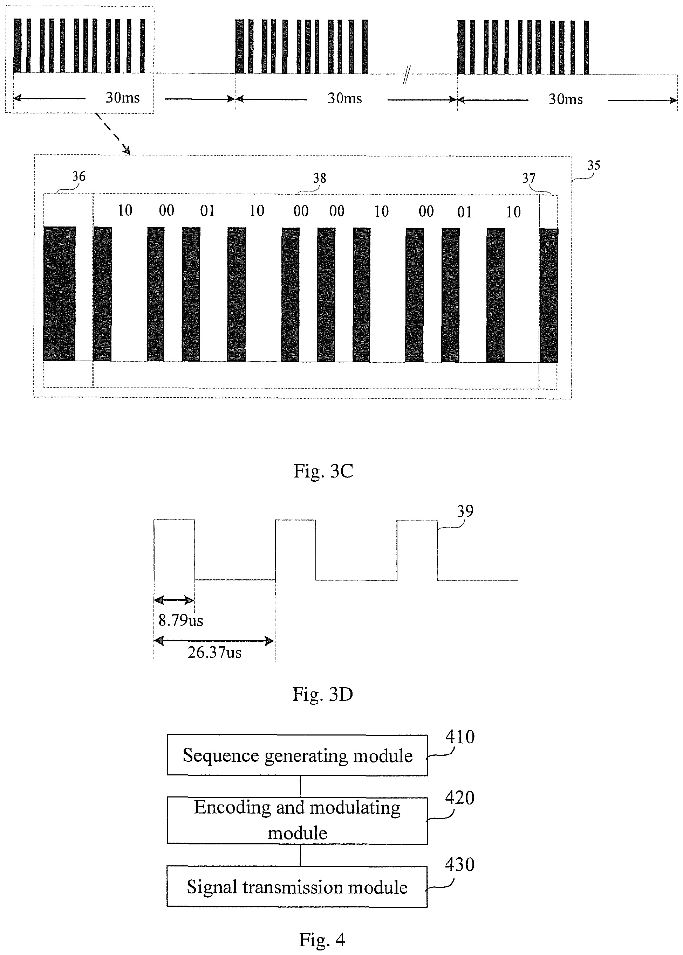

Referring to Fig. 3C, this figure is a block diagram illustratively showing an infrared signal 35 according to the method for transmitting an infrared signal provided by this embodiment. An encoded binary sequence contains a user code 10000110, a data code 00001000, and a check code 0110 which are indicated by 10 combinations of a high level pulse signal and a low level pulse signal.

In step 306, the encoded binary sequence is modulated to a carrier wave of a preset frequency to obtain a valid pulse string signal.

The remote controller modulates the encoded binary sequence to a carrier wave of a preset frequency to obtain a valid pulse string signal that carries the user code, the data code and the check code.

Referring to Fig. 3D, this figure is a block diagram illustratively showing a carrier wave according to the method for transmitting an infrared signal provided by this embodiment. The carrier wave 39 is a 37.92kHz pulse signal wave with a cycle of 26.37us, a pulse width of 8.79us and a duty ratio of 1/3.

In step 307, a start pulse string signal, the valid pulse string signal and a cut-off pulse string signal are combined in order, so as to obtain a pulse string signal.

The remote controller combines a start pulse string signal, the valid pulse string signal and a cut-off pulse string signal in order, so as to obtain a pulse string signal. The start pulse string signal is configured to indicate that the remote controller starts to work, and the remote controlled device is guided into a decoding program by the start pulse string signal. Referring to Fig. 3C, in this embodiment, the start pulse string signal 36 is a 1008.8us AGC pulse (high level) and a 588us idle signal (low level). The cut-off pulse string signal is configured to indicate that transmission of a complete infrared signal is ended. Referring to Fig. 3C, in this embodiment, the cut-off pulse string signal 37 is a 588us AGC pulse (high level). The valid pulse string signal 38 is the signal obtained in the above step 306.

The pulse string signal 35 is the signal to be transmitted in an infrared signal form by the remote controller. The pulse string signal 35 includes the start pulse string signal 36, the valid pulse string signal 38 and the cut-off pulse string signal 37 arranged in order from front to back, and the remote controller transmit them according to the above order in the subsequent transmission process.

In step 308, the pulse string signal is transmitted repeatedly in an infrared signal form according to a preset transmission cycle before the key is released.

Before the key is released, the remote controller transmits the pulse string signal repeatedly in an infrared signal form according to a preset transmission cycle. In order to ensure that over a time interval for a certain key in the remote controller from being pressed by a user to being released under a normal operation state, the remote may send at least two complete pulse string signals in an infrared signal form, the preset transmission cycle may be less than a predetermined threshold.

After time periods for pressing a key by some users are sampled in advance, the predetermined threshold may be set according to the sampled key pressing time periods. A key pressing time period is a time internal from a user pressing a key in a remote controller to releasing the key under a normal operation state. For example, key pressing time periods of 100 users are sampled for a plurality of number of times in advance to obtain 1000 samples, the calculated average key pressing time period is 100ms, and then the predetermined threshold is set as 100ms/2 = 50ms. That is, the preset transmission cycle may to be less than 50ms.

The shorter the preset transmission cycle is set, the higher the transmission frequency of the signals will be, and a larger number of complete pulse string signals will be sent in an infrared signal form by the remote controller over the time interval for a certain key in the remote controller from being pressed by a user to being released. Thus, the possibility of complete reception of the infrared signals will be improved, i.e., the anti-interference capability and success rate of remote control of the remote controller are improved. Referring to Fig. 3C, in this embodiment, the preset transmission cycle is 30ms, and the remote controller repeatedly transmits the pulse string signal 35 once every 30ms over the time interval for a certain key from being pressed to being released.

To sum up, in the method for transmitting an infrared signal provided by this embodiment, over a time interval for a certain key in the remote controller from being pressed to being released, a binary sequence corresponding to the key is generated, the binary sequence is encoded and modulated to obtain a pulse string signal, and then at least two pulse string signals are transmitted in an infrared signal form. Thus, the problem of the technical solution involved in the background wherein the remote controller has a weak anti-interference capability and a low success rate of remote control is solved. In the present embodiment, over the time interval for a certain key in the remote controller from being pressed to being released, at least two identical and complete pulse string signals are rapidly sent in an infrared signal form by the remote controller, as compared with the technical solution involved in the background in which over a time interval for a certain key in the remote controller from being pressed to being released, the remote controller may only send one complete infrared signal. Thus, possibility of complete reception of the infrared signals is improved, i.e., the anti-interference capability and success rate of remote control of the remote controller are improved.

In addition, in the method for transmitting an infrared signal provided by this embodiment, by dividing the user code and the data code into segments and then generating the check code by calculations, the length of the check code may be shortened, and the length of the pulse string signal obtained by subsequent encoding and modulating may be relatively short, and this provides a guarantee for shortening the signal transmission cycle. Moreover, by performing segment encoding on the binary sequence, the length of the pulse string signal obtained by encoding and modulating may be further shortened, and this provides a more sufficient guarantee for shortening the signal transmission cycle.

The following are embodiments of the apparatus of the present disclosure, which may be configured to perform the embodiments of the method of the present disclosure. For details that are not disclosed in the embodiments of the apparatus of the present, refer to the embodiments of the method of the present disclosure.

Fig. 4 is a block diagram showing an apparatus for transmitting an infrared signal according to an exemplary embodiment. The apparatus for transmitting an infrared signal may be implemented by software, hardware or a combination of the both into a part of or whole of a remote controller. The apparatus for transmitting an infrared signal may include a sequence generating module 410, an encoding and modulating module 420 and a signal transmission module 430.

The sequence generating module 410 is configured to, for each key in a remote controller, generate a binary sequence corresponding to the key when the key is pressed.

The encoding and modulating module 420 is configured to encode and modulate the binary sequence to obtain a pulse string signal.

The signal transmission module 430 is configured to transmit at least two pulse string signals in an infrared signal form before the key is released.

To sum up, in the apparatus for transmitting an infrared signal provided by this embodiment, over a time interval for a certain key in the remote controller from being pressed to being released, a binary sequence corresponding to the key is generated, the binary sequence is encoded and modulated to obtain a pulse string signal, and then at least two pulse string signals are transmitted in an infrared signal form. Thus, the problem of the technical solution involved in the background wherein the remote controller has a weak anti-interference capability and a low success rate of remote control is solved. In the present embodiment, over the time interval for a certain key in the remote controller from being pressed to being released, at least two identical and complete pulse string signals are rapidly sent in an infrared signal form by the remote controller, as compared with the technical solution involved in the background in which over a time interval for a certain key in the remote controller from being pressed to being released, the remote controller may only send one complete infrared signal. Thus, possibility of complete reception of the infrared signals is improved, i.e., the anti-interference capability and success rate of remote control of the remote controller are improved.

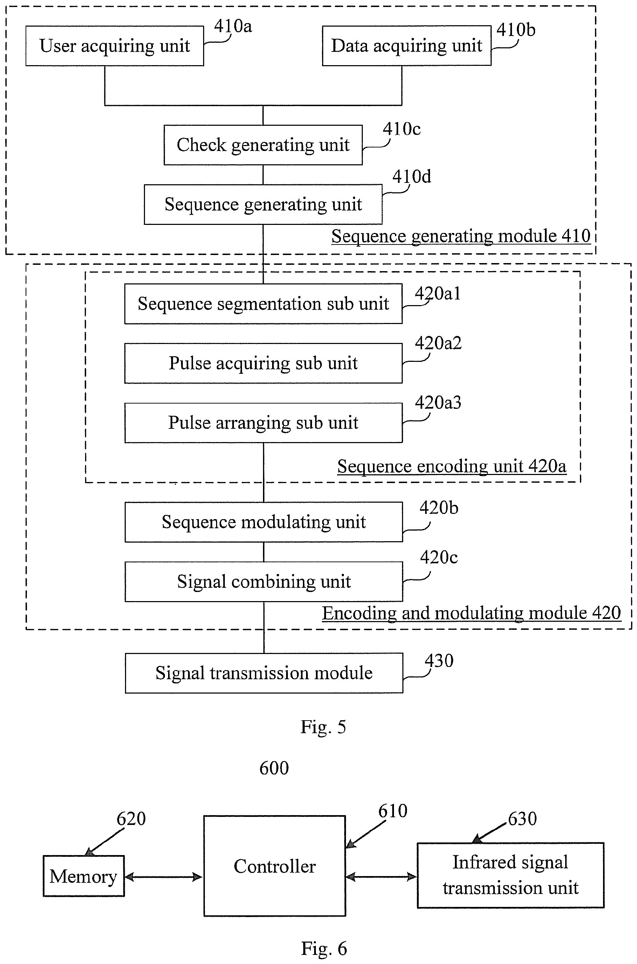

Fig. 5 is a block diagram showing an apparatus for transmitting an infrared signal according to another exemplary embodiment. The apparatus for transmitting an infrared signal may be implemented by software, hardware or a combination of the both into a part of or whole of a remote controller. The apparatus for transmitting an infrared signal may include a sequence generating module 410, an encoding and modulating module 420, and a signal transmission module 430.

The sequence generating module 410 is configured to, for each key in a remote controller, generate a binary sequence corresponding to the key when the key is pressed.

The sequence generating module 410 includes a user acquiring unit 410a, a data acquiring unit 410b, a check generating unit 410c and a sequence generating unit 410d.

The user acquiring unit 410a is configured to acquire a user code corresponding to the remote controller when the key is pressed.

The data acquiring unit 410b is configured to acquire a data code corresponding to the key.

The check generating unit 410c is configured to generate a check code according to the user code and the data code.

The check generating unit 410c includes a direct calculation sub unit or a segment calculation sub unit.

The direct calculation sub unit is configured to perform calculations on the user code and the data code according to a preset operational rule to obtain the check code.

The segment calculation sub unit is configured to averagely divide the user code and the data code into m segments, m≥2, and to sequentially perform calculations on the m segments of the user code and the m segments of the data code arranged in order according to the preset operational rule to obtain the check code.

The sequence generating unit 410d is configured to generate a binary sequence containing the user code, the data code and the check code.

The encoding and modulating module 420 is configured to encode and modulate the binary sequence to obtain a pulse string signal.

The encoding and modulating module 420 includes a sequence encoding unit 420a, a sequence modulating unit 420b and a signal combining unit 420c.

The sequence encoding unit 420a is configured to encode the binary sequence with a combination of a high level pulse signal and a low level pulse signal.

The sequence encoding unit 420a includes a sequence segmentation sub unit 420a1, a pulse acquiring sub unit 420a2 and a pulse arranging sub unit 420a3.

The sequence segmentation sub unit 420alis configured to averagely divide the binary sequence into n binary sequence segments, and each binary sequence segment contains at least a two-bit binary number, n≥1.

The pulse acquiring sub unit 420a2 is configured to acquire combinations of a high level pulse signal and a low level pulse signal corresponding to respective binary sequence segments, according to a corresponding relationship between different binary sequence segments and different combinations of a high level pulse signal and a low level pulse signal.

For example, when each binary sequence segment contains a two-bit binary number, the corresponding relationship between different binary sequence segments and different combinations of a high level pulse signal and a low level pulse signal includes: a binary sequence segment "00" corresponding to a high level pulse signal with a first pulse width + a low level pulse signal with a second pulse width; a binary sequence segment "01" corresponding to a high level pulse signal with the first pulse width + a low level pulse signal with a third pulse width; a binary sequence segment "10" corresponding to a high level pulse signal with the first pulse width + a low level pulse signal with a fourth pulse width; and a binary sequence segment "11" corresponding to a high level pulse signal with the first pulse width + a low level pulse signal with a fifth pulse width; and any two of the second pulse width, the third pulse width, the fourth pulse width and the fifth pulse width are different from each other.

The pulse arranging sub unit 420a3 is configured to arrange the acquired n combinations of a high level pulse signal and a low level pulse signal in order, so as to obtain an encoded binary sequence.

The sequence modulating unit 420b is configured to modulate the encoded binary sequence to a carrier wave of a preset frequency to obtain a valid pulse string signal.

The signal combining unit 420c is configured to combine a start pulse string signal, the valid pulse string signal and a cut-off pulse string signal in order, so as to obtain a pulse string signal.

The signal transmission module 430 is configured to transmit at least two pulse string signals in an infrared signal form before the key is released.

The signal transmission module 430 is further configured to transmit the pulse string signal repeatedly in an infrared signal form according to a preset transmission cycle before the key is released.

To sum up, in the apparatus for transmitting an infrared signal provided by this embodiment, over a time interval for a certain key in the remote controller from being pressed to being released, a binary sequence corresponding to the key is generated, the binary sequence is encoded and modulated to obtain a pulse string signal, and then at least two pulse string signals are transmitted in an infrared signal form. Thus, the problem of the technical solution involved in the background wherein the remote controller has a weak anti-interference capability and a low success rate of remote control is solved. In the present embodiment, over the time interval for a certain key in the remote controller from being pressed to being released, at least two identical and complete pulse string signals are rapidly sent in an infrared signal form by the remote controller, as compared with the technical solution involved in the background in which over a time interval for a certain key in the remote controller from being pressed to being released, the remote controller may only send one complete infrared signal. Thus, possibility of complete reception of the infrared signals is improved, i.e., the anti-interference capability and success rate of remote control of the remote controller are improved.

In addition, in the apparatus for transmitting an infrared signal provided by this embodiment, by dividing the user code and the data code into segments and then generating the check code by calculations, the length of the check code may be shortened, and the length of the pulse string signal obtained by subsequent encoding and modulating may be relatively short, and this provides a guarantee for shortening the signal transmission cycle. Moreover, by performing segment encoding on the binary sequence, the length of the pulse string signal obtained by encoding and modulating may be further shortened, and this provides a more sufficient guarantee for shortening the signal transmission cycle.

With respect to the apparatus in the above embodiments, specific operations performed by each modules have been described in detail in the embodiments of related method, and detailed description are omitted here.

Fig. 6 is a block diagram showing a remote controller according to an exemplary embodiment. The remote controller 600 includes a controller 610, a memory 620 configured to store executable instructions by the controller 610, and an infrared signal transmission unit 630.

One or more programs are stored in the memory 620 and configured to be executed by the controller 610. The one or more programs contains instructions for performing the following operations:
for each key in a remote controller, generating a binary sequence corresponding to the key when the key is pressed;
encoding and modulating the binary sequence to obtain a pulse string signal; and
transmitting at least two pulse string signals in an infrared signal form before the key is released.

Alternatively, the one or more programs further contains instructions for perform the following operations:
acquiring a user code corresponding to the remote controller when the key is pressed;
acquiring a data code corresponding to the key;
generating a check code according to the user code and the data code; and
generating the binary sequence containing the user code, the data code and the check code.

Alternatively, the one or more programs further contains instructions for performing the following operations:
performing calculations on the user code and the data code according to a preset operational rule to obtain the check code;
   or,
averagely dividing the user code and the data code into m segments, m≥2; and sequentially performing calculations on the m segments of the user code and the m segments of the data code arranged in order according to the preset operational rule to obtain the check code.

Alternatively, the one or more programs further contains instructions for performing the following operations:
encoding the binary sequence with a combination of a high level pulse signal and a low level pulse signal;
modulating the encoded binary sequence to a carrier wave of a preset frequency to obtain a valid pulse string signal; and
combining a start pulse string signal, the valid pulse string signal and a cut-off pulse string signal in order, so as to obtain a pulse string signal.

Alternatively, the one or more programs further contains instructions for performing the following operations:
averagely dividing the binary sequence into n binary sequence segments, and each binary sequence segment contains at least a two-bit binary number, n≥1;
acquiring combinations of a high level pulse signal and a low level pulse signal corresponding to respective binary sequence segment, according to a corresponding relationship between different binary sequence segments and different combinations of a high level pulse signal and a low level pulse signal; and
arranging the acquired n combinations of a high level pulse signal and a low level pulse signal in order, so as to obtain an encoded binary sequence.

Alternatively, the one or more programs further contains instructions for performing the following operations:
transmitting the pulse string signal repeatedly in an infrared signal form according to a preset transmission cycle before the key is released.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for transmitting an infrared signal comprising:
for each key in a remote controller, generating (202) a binary sequence corresponding to the key when the key is pressed;
encoding and modulating (204) the binary sequence to obtain a pulse string signal;
and
transmitting (206) at least two pulse string signals in an infrared signal form before the key is released,
wherein encoding and modulating the binary sequence to obtain a pulse string signal comprises:
encoding (305) the binary sequence with a combination of a high level pulse signal and a low level pulse signal;
modulating (306) the encoded binary sequence into a carrier wave of a preset frequency to obtain a valid pulse string signal; and
combining (307) a start pulse string signal, the valid pulse string signal and a cut-off pulse string signal in order, so as to obtain a pulse string signal,
**characterized in that** encoding the binary sequence with a combination of a high level pulse signal and a low level pulse signal comprises:
averagely dividing the binary sequence into n binary sequence segments, and each binary sequence segment contains at least a two-bit binary number, n≥1;
acquiring combinations of a high level pulse signal and a low level pulse signal corresponding to respective binary sequence segments, according to a corresponding relationship between different binary sequence segments and different combinations of a high level pulse signal and a low level pulse signal; each combination of a high level pulse signal and a low level pulse signal consisting of one high level pulse signal and one low level pulse signal; and
arranging the acquired n combinations of a high level pulse signal and a low level pulse signal in order, so as to obtain an encoded binary sequence,
wherein generating a binary sequence corresponding to the key when the key is pressed comprises:
acquiring (301) a user code corresponding to the remote controller when the key is pressed;
acquiring (302) a data code corresponding to the key;
generating (303) a check code according to the user code and the data code; and
generating (304) the binary sequence containing the user code, the data code and the check code,
wherein, generating a check code according to the user code and the data code comprises:
averagely dividing the user code and the data code into m segments, m≥2; and sequentially performing calculations on the m segments of the user code and the m segments of the data code arranged in order according to the preset operational rule to obtain the check code.

2. The method according to claim 1, **characterized in that**, when each binary sequence segment contains a two-bit binary number, the corresponding relationship between different binary sequence segments and different combinations of a high level pulse signal and a low level pulse signal comprises:
a binary sequence segment "00" corresponding to a high level pulse signal with a first pulse width + a low level pulse signal with a second pulse width;
a binary sequence segment "01" corresponding to a high level pulse signal with the first pulse width + a low level pulse signal with a third pulse width;
a binary sequence segment "10" corresponding to a high level pulse signal with the first pulse width + a low level pulse signal with a fourth pulse width; and
a binary sequence segment "11" corresponding to a high level pulse signal with the first pulse width + a low level pulse signal with a fifth pulse width;
wherein any two of the second pulse width, the third pulse width, the fourth pulse width and the fifth pulse width are different from each other.

3. The method according to any one of claims 1-2, **characterized in that**, transmitting at least two pulse string signals in an infrared signal form before the key is released comprises:
transmitting the pulse string signals repeatedly in the infrared signal form according to a preset transmission cycle before the key is released.

4. An apparatus for transmitting an infrared signal comprising:
a sequence generating module (410) configured to, for each key in a remote controller, generate a binary sequence corresponding to the key when the key is pressed;
an encoding and modulating module (420) configured to encode and modulate the binary sequence to obtain a pulse string signal; and
a signal transmission module (430) configured to transmit at least two pulse string signals in an infrared signal form before the key is released,
wherein the encoding and modulating module comprises a sequence encoding unit (420a), a sequence modulating unit (420b) and a signal combining unit (420c);
the sequence encoding unit is configured to encode the binary sequence with a combination of a high level pulse signal and a low level pulse signal;
the sequence modulating unit is configured to modulate the encoded binary sequence into a carrier wave of a preset frequency to obtain a valid pulse string signal; and
the signal combining unit is configured to combine a start pulse string signal, the valid pulse string signal and a cut-off pulse string signal in order, so as to obtain a pulse string signal,
**characterized in that**, the sequence encoding unit comprises a sequence segmentation sub unit (420a1), a pulse acquiring sub unit (420a2) and a pulse arranging sub unit (420a3);
the sequence segmentation sub unit is configured to averagely divide the binary sequence into n binary sequence segments, and each binary sequence segment contains at least a two-bit binary number, n≥1;
the pulse acquiring sub unit is configured to acquire combinations of a high level pulse signal and a low level pulse signal corresponding to respective binary sequence segments, according to a corresponding relationship between different binary sequence segments and different combinations of a high level pulse signal and a low level pulse signal; each combination of a high level pulse signal and a low level pulse signal consisting of one high level pulse signal and one low level pulse signal; and
the pulse arranging sub unit is configured to arrange the acquired n combinations of a high level pulse signal and a low level pulse signal in order, so as to obtain an encoded binary sequence
wherein the sequence generating module comprises a user acquiring unit (410a), a data acquiring unit (410b), a check generating unit (410c) and a sequence generating unit (410d);
the user acquiring unit is configured to acquire a user code corresponding to the remote controller when the key is pressed;
the data acquiring unit is configured to acquire a data code corresponding to the key;
the check generating unit is configured to generate a check code according to the user code and the data code; and
the sequence generating unit is configured to generate the binary sequence containing the user code, the data code and the check code,
wherein the check generating unit comprises a segment calculation sub unit;
the segment calculation sub unit is configured to averagely divide the user code and the data code into m segments, m≥2, and to sequentially perform calculations on the m segments of the user code and the m segments of the data code arranged in order according to the preset operational rule to obtain the check code.

5. The apparatus according to claim 4, **characterized in that**, when each binary sequence segment contains a two-bit binary number, the corresponding relationship between different binary sequence segments and different combinations of a high level pulse signal and a low level pulse signal comprises:
a binary sequence segment "00" corresponding to a high level pulse signal with a first pulse width + a low level pulse signal with a second pulse width;
a binary sequence segment "01" corresponding to a high level pulse signal with the first pulse width + a low level pulse signal with a third pulse width;
a binary sequence segment "10" corresponding to a high level pulse signal with the first pulse width + a low level pulse signal with a fourth pulse width; and
a binary sequence segment"11" corresponding to a high level pulse signal with the first pulse width + a low level pulse signal with a fifth pulse width;
wherein any two of the second pulse width, the third pulse width, the fourth pulse width and the fifth pulse width are different from each other.

6. The apparatus according to any one of claims 4-5, **characterized in that**,
the signal transmission module is further configured to transmit the pulse string signal repeatedly in the infrared signal form according to a preset transmission cycle before the key is released.

7. A remote controller comprising an apparatus according to any one of claims 4 to 6.

## Patentansprüche

1. Verfahren zum Übertragen eines infraroten Signals, umfassend:
für jede Taste einer Fernbedienung Erzeugen (202) einer Binärsequenz, die der Taste entspricht, wenn die Taste gedrückt wird,
Codieren und Modulieren (204) der Binärsequenz, um ein Impulsfolgesignal zu erhalten, und
Übertragen (206) wenigstens zweier Impulsfolgesignale in infraroter Signalform, bevor die Taste freigegeben wird,
wobei Codieren und Modulieren der Binärsequenz zum Erhalten eines Impulsfolgesignals umfasst:
Codieren (305) der Binärsequenz mit einer Kombination aus einem hochstufigen Impulssignal und einem niederstufigen Impulssignal,
Modulieren (306) der codierten Binärsequenz in eine Trägerwelle einer vorgegebenen Frequenz, um ein zulässiges Impulsfolgesignal zu erhalten, und
Kombinieren (307) eines Start-Impulsfolgesignals, des zulässigen Impulsfolgesignals und eines Trenn-Impulsfolgesignals in dieser Reihenfolge, um ein Impulsfolgesignal zu erhalten,
**dadurch gekennzeichnet, dass** das Codieren der Binärsequenz mit einer Kombination aus einem hochstufigen Impulssignal und einem niederstufigen Impulssignal umfasst:
durchschnittliches Teilen der Binärsequenz in n Binärsequenzsegmente, wobei jedes Binärsequenzsegment wenigstens eine Zwei-Bit-Binärzahl enthält, wobei n≥1,
Erhalten von Kombinationen aus einem hochstufigen Impulssignal und einem niederstufigen Impulssignal, das entsprechenden Binärsequenzsegmenten entspricht, gemäß einer entsprechenden Beziehung zwischen verschiedenen Binärsequenzsegmenten und verschiedenen Kombinationen aus einem hochstufigen Impulssignal und einem niederstufigen Impulssignal, wobei jede Kombination aus einem hochstufigen Impulssignal und einem niederstufigen Impulssignal aus einem hochstufigen Impulssignal und einem niederstufigen Impulssignal besteht, und
Anordnen der erhaltenen n Kombinationen aus einem hochstufigen Impulssignal und einem niederstufigen Impulssignal in Reihenfolge, um so eine codierte Binärsequenz zu erhalten,
wobei Erzeugen einer Binärsequenz entsprechend der Taste, wenn die Taste gedrückt wird, umfasst:
Erhalten (301) eines Nutzercodes entsprechend der Fernbedienung, wenn die Taste gedrückt wird,
Erhalten (302) eines Datencodes entsprechend der Taste,
Erzeugen (303) eines Prüfcodes gemäß dem Benutzercode und dem Datencode und
Erzeugen (304) der Binärsequenz enthaltend den Benutzercode, den Datencode und den Prüfcode,
wobei Erzeugen eines Prüfcodes gemäß dem Benutzercode und dem Datencode umfasst:
durchschnittliches Teilen des Benutzercodes und des Datencodes in m Segmente mit m≥2 und sequentielles Ausführen von Berechnungen auf den m Segmenten des Benutzercodes und den m Segmenten des Datencodes, die in Reihenfolge angeordnet sind, gemäß einer vorgegebenen Betriebsregel, um den Prüfcode zu erhalten.

2. Verfahren nach Anspruch 1, **dadurch gekennzeichnet, dass**, wenn jedes Binärsequenzsegment eine Zwei-Bit-Binärzahl enthält, die entsprechende Beziehung zwischen verschiedenen Binärsequenzsegmenten und verschiedenen Kombinationen aus einem hochstufigen Impulssignal und einem niederstufigen Impulssignal umfasst:
ein Binärsequenzsegment "00" entsprechend einem hochstufigen Impulssignal mit einer ersten Pulsbreite + einem niederstufigen Impulssignal mit einer zweiten Pulsbreite,
ein Binärsequenzsegment "01" entsprechend einem hochstufigen Impulssignal mit der ersten Pulsbreite + einem niederstufigen Impulssignal mit einer dritten Pulsbreite,
ein Binärsequenzsegment "10" entsprechend einem hochstufigen Impulssignal mit der ersten Pulsbreite + einem niederstufigen Impulssignal mit einer vierten Pulsbreite und
ein Binärsequenzsegment "11" entsprechend einem hochstufigen Impulssignal mit der ersten Pulsbreite + einem niederstufigen Impulssignal mit einer fünften Pulsbreite,
wobei zwei beliebige der zweiten Pulsbreite, der dritten Pulsbreite, der vierten Pulsbreite und der fünften Pulsbreite voneinander verschieden sind.

3. Verfahren nach einem der Ansprüche 1 bis 2, **dadurch gekennzeichnet, dass** Übertragen der wenigstens zwei Impulsfolgensignale in infraroter Signalform, bevor die Taste freigegeben wird, umfasst:
wiederholtes Übertragen der Impulsfolgesignale in der infraroten Signalform gemäß einem vorgegebenen Übertragungszyklus, bevor die Taste freigegeben wird.

4. Vorrichtung zum Übertragen eines infraroten Signals, umfassend:
ein Sequenzerzeugungsmodul (410), das dazu ausgebildet ist, für jede Taste einer Fernbedienung eine Binärsequenz entsprechend der Taste zu erzeugen, wenn die Taste gedrückt wird,
ein Codier- und Modulationsmodul (420), das dazu ausgebildet ist, die Binärsequenz zu codieren und zu modulieren, um ein Impulsfolgesignal zu erhalten, und
ein Signalübertragungsmodul (430), das dazu ausgebildet ist, wenigstens zwei Impulsfolgesignale in Form eines infraroten Signals zu übertragen, bevor die Taste freigegeben wird,
wobei das Codier- und Modulationsmodul eine Sequenzcodiereinheit (420a), eine Sequenzmodulationseinheit (420b) und eine Signalkombinationseinheit (420c) umfasst,
wobei die Sequenzcodiereinheit dazu ausgebildet ist, die Binärsequenz mit einer Kombination aus einem hochstufigen Impulssignal und einem niederstufigen Impulssignal zu codieren,
wobei die Sequenzmodulationseinheit dazu ausgebildet ist, die codierte Binärsequenz in eine Trägerwelle einer vorgegebenen Frequenz zu modulieren, um ein gültiges Impulsfolgesignal zu erhalten, und
wobei die Signalkombinationseinheit dazu ausgebildet ist, ein Start-Impulsfolgesignal, das gültige Impulsfolgesignal und ein Trenn-Pulsfolgesignal in Reihenfolge zu kombinieren, um ein Impulsfolgesignal zu erhalten,
**dadurch gekennzeichnet, dass** die Sequenzcodiereinheit eine Sequenzsegmentierungsuntereinheit (420a1), eine Impulserhaltungsuntereinheit (420a2) und eine Impulsanordnungsuntereinheit (420a3) umfasst,
wobei die Sequenzsegmentierungsuntereinheit dazu ausgebildet ist, die Binärsequenz durchschnittlich in n Binärsequenzsegmente zu teilen, wobei jedes Binärsequenzsegment wenigstens eine Zwei-Bit-Binärzahl enthält, wobei n≥1,
wobei die Impulserhaltungsuntereinheit dazu ausgebildet ist, Kombinationen aus einem hochstufigen Impulssignal und einem niederstufigen Impulssignal zu erhalten, die entsprechenden Binärsequenzsegmenten entsprechen, gemäß einer entsprechenden Beziehung zwischen verschiedenen Binärsequenzsegmenten und verschiedenen Kombinationen aus einem hochstufigen Impulssignal und einem niederstufigen Impulssignal, wobei jede Kombination aus einem hochstufigen Impulssignal und einem niederstufigen Impulssignal aus einem hochstufigen Impulssignal und einem niederstufigen Impulssignal besteht, und
wobei die Impulsanordnungsuntereinheit dazu ausgebildet ist, die erhaltenen n Kombinationen aus einem hochstufigen Impulssignal und einem niederstufigen Impulssignal in Reihenfolge anzuordnen, um so eine codierte Binärsequenz zu erhalten,
wobei das Sequenzerzeugungsmodul eine Benutzererlangungseinheit (410a), eine Datenerlangungseinheit (410b), eine Prüfungserzeugungseinheit (410c) und eine Sequenzerzeugungseinheit (410d) umfasst,
wobei die Benutzererlangungseinheit dazu ausgebildet ist, einen Benutzercode entsprechend der Fernbedienungen zu erlangen, wenn die Taste gedrückt wird,
wobei die Datenerlangungseinheit dazu ausgebildet ist, einen Datencode entsprechend der Taste zu erlangen,
wobei die Prüfungserzeugungseinheit dazu ausgebildet ist, einen Prüfcode gemäß dem Benutzercode und dem Datencode zu erzeugen, und
wobei die Sequenzerzeugungseinheit dazu ausgebildet ist, die Binärsequenz umfassend den Benutzercode, den Datencode und den Prüfcode zu erzeugen,
wobei die Prüfungsgeneriereinheit eine Segmentberechnungsuntereinheit umfasst,
wobei die Segmentberechnungsuntereinheit dazu ausgebildet ist, den Benutzercode und den Datencode durchschnittlich in m Segmente zu unterteilen, wobei m≥2, und sequenziell Berechnungen auf den m Segmenten des Benutzercodes und den m Segmenten des Datencodes, die in Reihenfolge angeordnet sind, gemäß einer vorgegebenen Betriebsregel durchzuführen, um den Prüfcode zu erhalten.

5. Vorrichtung nach Anspruch 4, **dadurch gekennzeichnet, dass**, wenn jedes Binärsequenzsegment eine Zwei-Bit-Binärzahl enthält, die entsprechende Beziehung zwischen verschiedenen Binärsequenzsegmenten und verschiedenen Kombinationen aus einem hochstufigen Impulssignal und einem niederstufigen Impulssignal umfasst:
ein Binärsequenzsegment "00" entsprechend einem hochstufigen Impulssignal mit einer ersten Pulsbreite + einem niederstufigen Impulssignal mit einer zweiten Pulsbreite,
ein Binärsequenzsegment "01" entsprechend einem hochstufigen Impulssignal mit der ersten Pulsbreite + einem niederstufigen Impulssignal mit einer dritten Pulsbreite,
ein Binärsequenzsegment "10" entsprechend einem hochstufigen Impulssignal mit der ersten Pulsbreite + einem niederstufigen Impulssignal mit einer vierten Pulsbreite und
ein Binärsequenzsegment "11" entsprechend einem hochstufigen Impulssignal mit der ersten Pulsbreite + einem niederstufigen Impulssignal mit einer fünften Pulsbreite,
wobei zwei beliebige der zweiten Pulsbreite, der dritten Pulsbreite, der vierten Pulsbreite und der fünften Pulsbreite voneinander verschieden sind.

6. Vorrichtung nach einem der Ansprüche 4 - 5, **dadurch gekennzeichnet, dass**
das Signalübertragungsmodul ferner dazu ausgebildet ist, das Impulsfolgesignal wiederholt in der infraroten Signalform gemäß einem vorgegebenen Übertragungszyklus zu übertragen, bevor die Taste freigegeben wird.

7. Fernbedienung umfassend eine Vorrichtung nach einem der Ansprüche 4 bis 6.

## Revendications

1. Procédé de transmission d'un signal infrarouge, comprenant :
pour chaque touche d'une télécommande, la génération (202) d'une séquence binaire correspondant à la touche lorsque la touche est actionnée ;
l'encodage et la modulation (204) de la séquence binaire afin d'obtenir un signal à trains d'impulsions ; et
la transmission (206) d'au moins deux signaux à trains d'impulsions sous la forme d'un signal infrarouge avant que la touche ne soit relâchée,
l'encodage et la modulation de la séquence binaire afin d'obtenir un signal à trains d'impulsions comprenant :
l'encodage (305) de la séquence binaire avec une combinaison d'un signal à impulsions de haut niveau et un signal à impulsions de bas niveau ;
la modulation (306) de la séquence binaire encodée en une onde porteuse d'une fréquence prédéterminée afin d'obtenir un signal à trains d'impulsions valide ; et
la combinaison (307) d'un signal à trains d'impulsions initial, du signal à trains d'impulsions valide et d'un signal à trains d'impulsions de coupure dans l'ordre afin d'obtenir un signal à trains d'impulsions,
**caractérisé en ce que** l'encodage de la séquence binaire avec une combinaison d'un signal à impulsions de haut niveau et d'un signal à impulsions de bas niveau comprend :
la division en moyenne de la séquence binaire en n segments de séquence binaire, chaque segment de séquence binaire contenant au moins un nombre binaire à deux bits, n ≥1 ;
l'acquisition de combinaisons d'un signal à impulsions de haut niveau et d'un signal à impulsions de bas niveau correspondant à des segments de séquence binaire respectifs, selon une relation correspondante entre différents segments de séquence binaire et différentes combinaisons d'un signal à impulsions de haut niveau et d'un signal à impulsions de bas niveau ; chaque combinaison d'un signal à impulsions de haut niveau et d'un signal à impulsions de bas niveau étant constitué d'un signal à impulsions de haut niveau et d'un signal à impulsions de bas niveau ; et
la disposition des n combinaisons acquises d'un signal à impulsions de haut niveau et d'un signal à impulsions de bas niveau afin d'obtenir une séquence binaire encodée,
la génération d'une séquence binaire correspondant à la touche lorsque la touche est actionnée comprenant :
l'acquisition (301) d'un code d'utilisateur correspondant à la télécommande lorsque la touche est actionnée ;
l'acquisition (302) d'un code de données correspondant à la touche ;
la génération (303) d'un code de vérification en fonction du code d'utilisateur et du code de données ; et
la génération (304) de la séquence binaire contenant le code d'utilisateur, le code de données et le code de vérification,
la génération d'un code de vérification en fonction du code d'utilisateur et du code de données comprenant :
la division en moyenne du code d'utilisateur et du code de données en m segments, m≥2 ; et la réalisation séquentielle de calculs sur les m segments du code d'utilisateur et des m segments du code de données disposés dans l'ordre en fonction de la règle opérationnelle prédéterminée afin d'obtenir le code de vérification.

2. Procédé selon la revendication 1, **caractérisé en ce que**, lorsque chaque segment de séquence binaire contient un nombre à deux bits, la relation correspondante entre différents segments de séquence binaire et différentes combinaisons d'un signal à impulsions de haut niveau et d'un signal à impulsions de bas niveau comprend :
un segment de séquence binaire « 00 » correspondant à un signal à impulsions de haut niveau avec une première largeur d'impulsion + un signal à impulsions de bas niveau avec une deuxième largeur d'impulsion ;
un segment de séquence binaire « 01 » correspondant à un signal à impulsions de haut niveau avec la première largeur d'impulsion + un signal à impulsions de bas niveau avec une troisième largeur d'impulsion ;
un segment de séquence binaire « 10 » correspondant à un signal à impulsions de haut niveau avec la première largeur d'impulsion + un signal à impulsions de bas niveau avec une quatrième largeur d'impulsion ; et
un segment de séquence binaire « 11 » correspondant à un signal à impulsions de haut niveau avec la première largeur d'impulsion + un signal à impulsions de bas niveau avec une cinquième largeur d'impulsion ;
deux parmi la deuxième largeur d'impulsion, la troisième largeur d'impulsion, la quatrième largeur d'impulsion et la cinquième largeur d'impulsion étant différentes l'une de l'autre.

3. Procédé selon l'une des revendications 1-2, **caractérisé en ce que** la transmission d'au moins deux signaux à trains d'impulsions sous la forme d'un signal infrarouge avant que la touche ne soit relâchée comprend :
la transmission des signaux à trains d'impulsions de manière répétitive sous la forme du signal infrarouge en fonction d'un cycle de transmission prédéterminé avant que la touche ne soit relâchée.

4. Appareil de transmission d'un signal infrarouge comprenant :
un module de génération de séquence (410) conçu pour générer, pour chaque touche dans une télécommande, une séquence binaire correspondant à la touche lorsque la touche est actionnée ;
un module d'encodage et de modulation (420) conçu pour encoder et moduler la séquence binaire afin d'obtenir un signal à trains d'impulsions ; et
un module de transmission de signaux (430) conçu pour transmettre au moins deux signaux à trains d'impulsions sous la forme d'un signal infrarouge avant que la touche ne soit relâchée,
le module d'encodage et de modulation comprenant une unité d'encodage de séquence (420a), une unité de modulation de séquence (420b) et une unité de combinaison de signaux (420c) ;
l'unité d'encodage de séquence étant conçue pour encoder la séquence binaire avec une combinaison d'un signal à impulsions de haut niveau et d'un signal à impulsions de bas niveau ;
l'unité de modulation de séquence étant conçu pour moduler la séquence binaire encodée en une onde porteuse d'une fréquence prédéterminée afin d'obtenir un signal à trains d'impulsions valide ; et
l'unité de combinaison de signaux étant conçue pour combiner un signal à trains d'impulsions initial, le signal à trains d'impulsions valide et un signal à trains d'impulsions de coupure afin d'obtenir un signal à trains d'impulsions,
**caractérisé en ce que** l'unité d'encodage de séquence comprend une sous-unité de segmentation de séquence (420a1), une sous-unité d'acquisition d'impulsions (420a2) et une sous-unité de disposition d'impulsions (420a3) ;
la sous-unité de segmentation de séquence étant conçue pour diviser en moyenne la séquence binaire en n segments de séquence binaire et chaque segment de séquence binaire contenant au moins un nombre à deux bits, n≥1;
la sous-unité d'acquisition d'impulsions étant conçue pour acquérir des combinaisons d'un signal à impulsions de haut niveau et d'un signal à impulsions de bas niveau correspondant à des segments de séquence binaire, selon une relation correspondant entre différents segments de séquence binaire et différentes combinaisons d'un signal à impulsions de haut niveau et d'un signal à impulsions de bas niveau ; chaque combinaison d'un signal à impulsions de haut niveau et d'un signal à impulsions de bas niveau étant constitué d'un signal à impulsions de haut niveau et d'un signal à impulsions de bas niveau ; et
la sous-unité de disposition d'impulsions étant conçue pour disposer le n combinaisons d'un signal à impulsions de haut niveau et d'un signal à impulsions de bas niveau acquises dans un ordre déterminé afin d'obtenir une séquence binaire encodée,
le module de génération de séquence comprenant une unité d'acquisition d'utilisateur (410a), une unité d'acquisition de données (410b), une unité de génération de vérification (410c) et une unité de génération de séquences (410d) ;
l'unité d'acquisition d'utilisateur étant conçue pour acquérir un code d'utilisateur correspondant à la télécommande lorsque la touche est actionnée ;
l'unité d'acquisition de données étant conçue pour générer un code de données correspondant à la touche ;
l'unité de génération de vérification étant conçue pour générer un code de vérification en fonction du code d'utilisateur et du code de données ; et
l'unité de génération de séquences étant conçue pour générer la séquence binaire contenant le code d'utilisateur, le code de données et le code de vérification,
l'unité de génération de vérification comprenant une sous-unité de calcul de segment ;
la sous-unité de calcul de segment étant conçue pour diviser en moyenne le code d'utilisateur et le code de données en m segments, m≥2, et pour réaliser de manière séquentielle des calculs sur les m segments du code d'utilisateur et sur les m segments du code de données disposés dans l'ordre selon la règle opérationnelle prédéterminée afin d'obtenir le code de vérification.

5. Appareil selon la revendication 4, **caractérisé en ce que**, lorsque chaque segment de séquence binaire contient un nombre à deux bits, la relation correspondante entre différents segments de séquence binaire et différentes combinaisons d'un signal à impulsions de haut niveau et un signal à impulsions de bas niveau comprend :
un segment de séquence binaire « 00 » correspondant à un signal à impulsions de haut niveau avec une première largeur d'impulsion + un signal à impulsions de bas niveau avec une deuxième largeur d'impulsion ;
un segment de séquence binaire « 01 » correspondant à un signal à impulsions de haut niveau avec la première largeur d'impulsion + un signal à impulsions de bas niveau avec une troisième largeur d'impulsion ;
un segment de séquence binaire « 10 » correspondant à un signal à impulsions de haut niveau avec la première largeur d'impulsion + un signal à impulsions de bas niveau avec une quatrième largeur d'impulsion ; et
un segment de séquence binaire « 11 » correspondant à un signal à impulsions de haut niveau avec la première largeur d'impulsion + un signal à impulsions de bas niveau avec une cinquième largeur d'impulsion ;
deux parmi la deuxième largeur d'impulsion, la troisième largeur d'impulsion, la quatrième largeur d'impulsion et la cinquième largeur d'impulsion étant différentes l'une de l'autre.

6. Appareil selon l'une des revendications 4 à 5, **caractérisé en ce que**
le module de transmission de signaux est en outre conçu pour transmettre le signal à trains d'impulsions de manière répétitive sous la forme d'un signal infrarouge selon un cycle de transmission prédéterminé avant que la touche ne soit relâchée.

7. Télécommande comprenant un appareil selon l'une des revendications 4 à 6.
